# EUROPÄISCHE PATENTSCHRIFT

(11) **EP 0 679 596 B1**
(45) Veröffentlichungstag und Bekanntmachung des Hinweises auf die Patenterteilung: **09.09.1998**
(21) Anmeldenummer: 95105607.6
(22) Anmeldetag: 13.04.1995
(51) Int. Cl.: B65H 27/00, D21G 1/02, B65H 23/02

(54) **Leitwalze für Bahnmaterial, insbesondere für Papierherstell und -veredlungsmaschinen**
Guide roller for webs, especially for paper production and conversion machines
Rouleau conducteur pour matériel sous forme de bande notamment pour machines à fabriquer et à améliorer le papier

(30) Priorität: 25.04.1994 DE 4414317
(43) Veröffentlichungstag der Anmeldung: 02.11.1995
(73) Patentinhaber: Voith Sulzer Finishing GmbH, 47803 Krefeld (DE)
(72) Erfinder: Wenzel, Reinhard, D-47809 Krefeld (DE); Kayser, Franz, D-47608 Geldern (DE); Hawix, Irmgard, D-47800 Krefeld (DE)
(74) Vertreter: Knoblauch, Ulrich, Dr.-Ing.

(56) Entgegenhaltungen:
- DE-A- 2 110 079
- DE-A- 2 227 904
- DE-A- 3 311 095
- DE-A- 3 338 965
- US-A- 3 198 411
- US-A- 3 961 737

## Beschreibung

Die Erfindung bezieht sich auf eine Leitwalze für Bahnmaterial, insbesondere für Papierherstell- und -veredlungsmaschinen, mit einem mittleren und zwei äußeren Walzenrohren, deren benachbarte Enden über Wälzlager auf einer an ihren Enden drehfest gelagerten Walzenachse abgestützt sind, während die freien Enden der äußeren Walzenrohre über Wälzlager auf radial verstellbaren Lagerelementen abgestützt sind.

Derartige Leitwalzen sind beispielsweise aus DE-PS 21 08 702 oder DE-PS 21 02 818 bekannt. Sie dienen auch als Breitstreckwalze und werden auch "Knickwalze" genannt, weil sich die äußeren Walzenmäntel durch Verstellung der Wälzlager an den freien Enden gegenüber dem Mittelrohr schrägstellen können. Auf diese Weise sollen aufgrund der Durchbiegung der Walzenachse bedingte Verformungen korrigiert werden.

Damit die auftretenden Schrägstellungen von den Wälzlagern aufgenommen werden können, werden jeweils an beiden Enden des mittleren und der äußeren Walzenrohre Pendelrollenlager vorgesehen. Diese sind teuer und wegen des relativ großen Walzenrohrdurchmessers überdimensioniert. Da überdies im Bereich der Trennstelle von mittlerem und äußerem Walzenrohr zwei Pendelrollenlager dicht nebeneinander angeordnet sind, sind diese Lager niedrig belastet und arbeiten häufig in einem Bereich, in dem Schlupfgefahr besteht, was zu Anschmierungen und zur Zerstörung der Pendelrollenlager führt. Des weiteren erzeugen die Pendelrollenlager eine so große Wärmemenge, daß sich bei vielen Anwendungszwecken das Bahnmaterial im Bereich dieser Lager unzulässig hoch erwärmt und damit die Qualität des Bahnmaterials vermindert wird.

Aus US-PS 39 61 737 ist es bekannt, einander benachbarte Enden von Walzenrohren über eine aus einem elastischen Ring bestehende Gelenkverbindung und ein diese untergreifendes Brückenelement und ein Wälzlager auf der Walzenachse abzustützen. Im Betrieb können sich die Walzenrohre auf Kragen abstützen, die auf einem Exzenter drehbar gelagert sind, so daß der elastische Ring dauernd verdichtet und wieder entspannt wird. Dabei entsteht Wärme.

Aus DE-OS 33 11 095 ist eine Breitstreckwalze bekannt, deren einzelne Walzenrohre jeweils in der Mitte über ein Wälzlager auf der Walzenachse abgestützt sind. Die einander benachbarten Enden der Walzenrohre sind über einen Ring aus flexiblem Material gelenkig und auf Drehmitnahme miteinander verbunden.

Aus DE-OS 22 27 904 ist ferner eine Breitstreckwalze zum Führen von Warenbahnen, wie Papier-, Kunststoff- oder Gewebebahnen, mit einer in Längsrichtung gebogenen Trägerwelle und mehreren um diese in Wellen-Längsrichtung aneinander gereihten, drehbar gelagerten und eine biegsame Lauffläche bildenden Rohrstücken bekannt. Im Bereich der Trennfuge ist an beiden benachbarten Rohrstückenden je ein Ring fest angebracht. Diese Ringe sind durch Mitnehmerstifte auf Drehmitnahme gekuppelt und übergreifen einen weiteren Ring an der Außenseite eines Rillenkugellagers unter Zwischenschaltung von vier Dichtringen, welche den Zutritt von äußerer Feuchtigkeit verhindern sollen.

Der Erfindung liegt die Aufgabe zugrunde, eine Leitwalze der eingangs beschriebenen Art anzugeben, bei der eine unzulässig hohe Erwärmung vermieden werden kann.

Diese Aufgabe wird erfindungsgemäß dadurch gelöst, daß die benachbarten Enden über ein sie untergreifendes Brückenelement auf Drehmitnahme miteinander verbunden sind, daß das Brückenelement sich auf einer gemeinsamen Wälzlagerung abstützt und über je eine Gelenkvorrichtung mit beiden benachbarten Enden verbunden ist und daß ein wärmeisolierendes Material zwischen Wälzlager und Walzenrohr angeordnet ist.

Da die benachbarten Enden über das Brückenelement miteinander gekuppelt sind, genügt eine gemeinsame Wälzlagerung. Da die Enden gelenkig miteinander verbunden sind, muß eine Schrägstellung nicht mehr vom Wälzlager aufgenommen werden. Es können daher sehr viel einfachere Wälzlager benutzt werden. Insbesondere können die kleinstmöglichen reibungsarmen Wälzlager, z.B. Rillenkugellager, eingesetzt werden, die auch nur eine minimale Wärmemenge erzeugen. In den meisten Fällen genügt es, lediglich ein solches Wälzlager für beide benachbarte Enden vorzusehen. Das wärmeisolierende Material verhindert weitgehend den Wärmezufluß zu den Walzenrohren. Die Wälzlagerung wird unter Zwischenschaltung des Brückenelements von dem Walzenvolumen belastet. Das Brückenelement kann dabei eine koaxiale Lage zur Walzenachse einnehmen, weil die beiden angrenzenden Enden der Walzenrohre gelenkig mit dem Brückenelement verbunden sind.

Eine vorteilhafte Ausführungsform besteht darin, daß die Gelenkvorrichtungen zu beiden Seiten eines gemeinsamen Wälzlagers angeordnet sind. Man kommt daher mit einem Wälzlager aus.

Eine Alternative besteht darin, daß die Gelenkvorrichtungen zwischen zwei gemeinsamen Wälzlagern angeordnet sind. Wegen des Abstandes zwischen den beiden Wälzlagern ist es in hohem Maße gesichert, daß das Brückenelement koaxial zur Walzenachse verläuft.

Die genannte Aufgabe wird erfindungsgemäß auch dadurch gelöst, daß die benachbarten Enden über ein sie untergreifendes Brückenelement auf Drehmitnahme miteinander verbunden sind, daß das Brückenelement an dem einen der benachbarten Enden fest angebracht und zwischen ihm und dem anderen Ende eine Gelenkvorrichtung vorgesehen ist, daß ein gemeinsames Wälzlager nur an einem der benachbarten Enden angreift daß ein wärmeisolierendes Material zwischen Wälzlager und Walzenrohr angeordnet ist.

Auch hierbei kommt man wegen der Gelenkverbindung zwischen Brückenelement und Walzenrohr zu dem Ergebnis, daß ein einziges Wälzlager für beide benachbarte Walzenenden ausreicht.

Zweckmäßigerweise greift das gemeinsame Wälzlager am Ende des mittleren Walzenrohres an. Da das mittlere Walzenrohr in der Regel eine größere Länge hat als die beiden äußeren Walzenrohre, wird hierdurch der axiale Abstand der Lager vergleichmäßigt.

Es wurde bereits als Vorteil erwähnt, daß als Wälzlager einfache Rillenkugellager verwendet werden können. Diese arbeiten besonders reibungsarm. Sie können auch schmal gehalten und gegebenenfalls paarweise nebeneinander verwendet werden.

Mit besonderem Vorteil weist die Gelenkvorrichtung einen elastischen Ring auf. Ein elastischer Ring verformt sich unter dem Einfluß der Schrägstellung und kann daher als Gelenk verwendet werden.

Eine vorteilhafte Möglichkeit besteht darin, daß die Gelenkvorrichtung durch eine Gummi-Metall-Buchse gebildet ist. Solche Buchsen sind handelsübliche Bauteile, die leicht gehandhabt werden können. Wenn Sie im Preßsitz eingebaut werden, dienen sie gleichzeitig als Drehkupplung.

Bei einer Alternative ist die Gelenkvorrichtung durch einen harten O-Ring und einen hieran radial abgestützten Profilring gebildet. Hierbei wirkt der O-Ring mit dem Profilring zusammen, um ein leichtgängiges Gelenk zu bilden. Auch bei dieser Ausbildungsform kann der O-Ring und gegebenenfalls der Profilring als Wärmeisolierung dienen.

Eine weitere bevorzugte Möglichkeit besteht darin, daß die Gelenkvorrichtung ein sphärisches Lager aufweist.

Günstig ist es auch, wenn die Gelenkvorrichtung das wärmeisolierende Material aufweist. Auf diese Weise wird ohne Zusatzelemente die in den Wälzlagern entstehende Wärme weitgehend von den Walzenrohren ferngehalten. Insbesondere kann ein elastischer Ring, dessen Material zumeist einen schlechten Wärmeleitwert hat, als Wärmeisolierung dienen.

In vielen Fällen ist es erwünscht, daß zur Drehmitnahme des einen Walzenrohres am Brückenelement bzw. am Walzenrohr ein Mitnehmer angebracht ist, der in das jeweils andere Element eingreift. Bei einer solchen Drehmitnahme brauchen keine Torsionskräfte über die Gelenkvorrichtung übertragen zu werden.

Die Erfindung wird nachstehend anhand in der Zeichnung dargestellter, bevorzugter Ausführungsbeispiele näher erläutert. Es zeigen:
- Fig. 1: einen Längsschnitt durch eine Leitwalze bekannter Konstruktion, deren Bereich A erfindungsgemäß verbessert wird, und
- Fig. 2-6: fünf Ausführungsbeispiele einer erfindungsgemäßen Konstruktion.

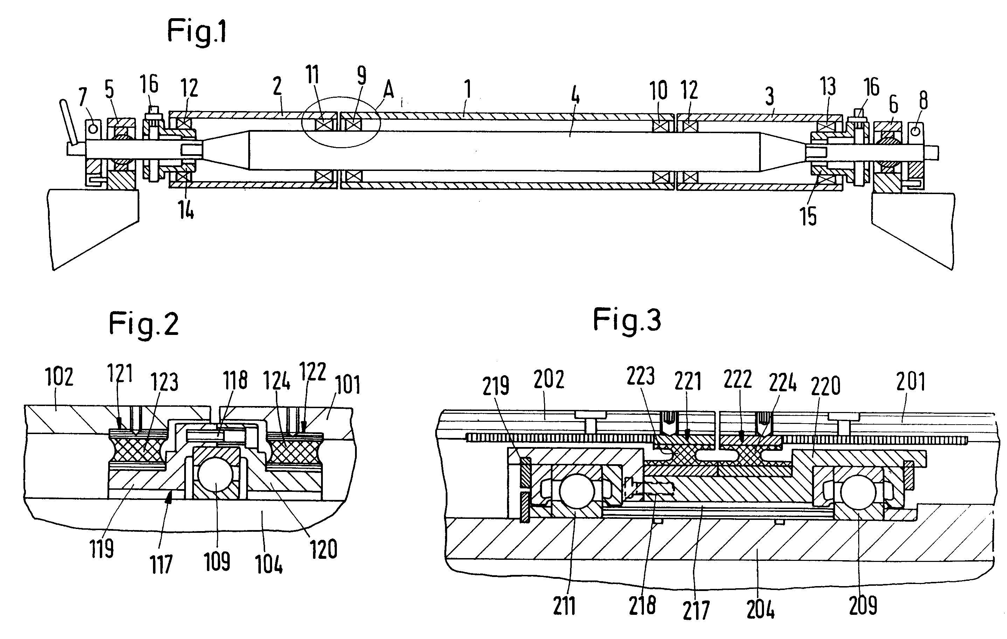

Die Leitwalze der Fig. 1 weist ein mittleres Walzenrohr 1 und zwei äußere Walzenrohre 2 und 3 auf. Diese Walzenrohre werden von einer Walzenachse 4 durchsetzt, die an ihren Enden in Lagerböcken 5 und 6 gelagert und mittels der Sperrelemente 7 und 8 gegen Drehung gesichert ist. Das mittlere Walzenrohr 1 ist an seinen Enden über Pendelrollenlager 9 und 10 auf der Walzenachse 4 gelagert. Die äußeren Walzenrohre 2 und 3 sind an ihren einander zugewandten Enden über Pendelrollenlager 11 und 12 auf der Walzenachse 4 und an ihren freien Enden über Pendelrollenlager 12 und 13 auf Lagerelementen 14 und 15 abgestützt, die mit Hilfe von Verstelleinrichtungen 16 radial verlagert werden können. Statt der veranschaulichten Radialverstellung kann auch ein exzentrisches Lagerelement gedreht werden.

Mit Hilfe dieser Verstelleinrichtungen können die äußeren Pendelrollenlager 12 und 13 so verstellt werden, daß sich die äußeren Walzenrohre 2 und 3 gegenüber dem mittleren Walzenrohr 1 schrägstellen bzw. daß achsdurchbiegungsbedingte Schrägstellungen der äußeren Walzenrohre korrigiert werden. Damit diese Schrägstellungen bei rotierenden Walzenrohren möglich waren, mußten die Wälzlager als Pendelrollenlager 9 bis 13 ausgebildet werden.

Bei der erfindungsgemäßen Ausführungsform nach Fig. 2 werden für entsprechende Teile um 100 erhöhte Bezugszeichen verwendet. Hier sind die Enden der beiden Walzenrohre 101 und 102 über ein gemeinsames Wälzlager 109, das als Rillenkugellager ausgelegt ist, auf der Walzenachse 104 abgestützt. Zu diesem Zweck ist ein Brückenelement 117 vorgesehen, das aus zwei, über Schrauben 118 miteinander verbundenen Teilen 119 und 120 besteht. Das Brückenelement 117 ist über je eine Gelenkvorrichtung 121, 122 mit den benachbarten Enden der Walzenrohre 101, 102 verbunden. Die Gelenkvorrichtung weist je einen elastischen Ring 123, 124 auf und ist als Gummi-Metall-Buchse ausgebildet.

Eine Schrägstellung zwischen den Walzenrohren 101 und 102 wird vollständig von den elastischen Ringen 123, 124 aufgenommen. Das Brückenelement 117 behält seine zur Walzenachse 104 konzentrische Lage. Das Wälzlager 109 wird daher nur in Radialrichtung belastet. Die trotzdem noch entstehende Wärme kann nicht ohne weiteres auf die Walzenrohre übertreten, weil das Material des elastischen Ringes 123, 124 als Wärmeisolation dient.

Bei der Ausführungsform nach Fig. 3 werden für entsprechende Teile um 200 erhöhte Bezugszeichen verwendet. Bei dieser Konstruktion wird das aus den Teilen 219 und 220 bestehende Brückenelement 217 über zwei Wälzlager 209 und 211, die eine gemeinsame Wälzlagerung bilden und wiederum als einfache Rillenkugellager ausgebildet sind, abgestützt. Die beiden Gelenkvorrichtungen 221 und 222 befinden sich zwischen den beiden Wälzlagern 209 und 211. Die Funktionsweise entspricht derjenigen der Fig. 2.

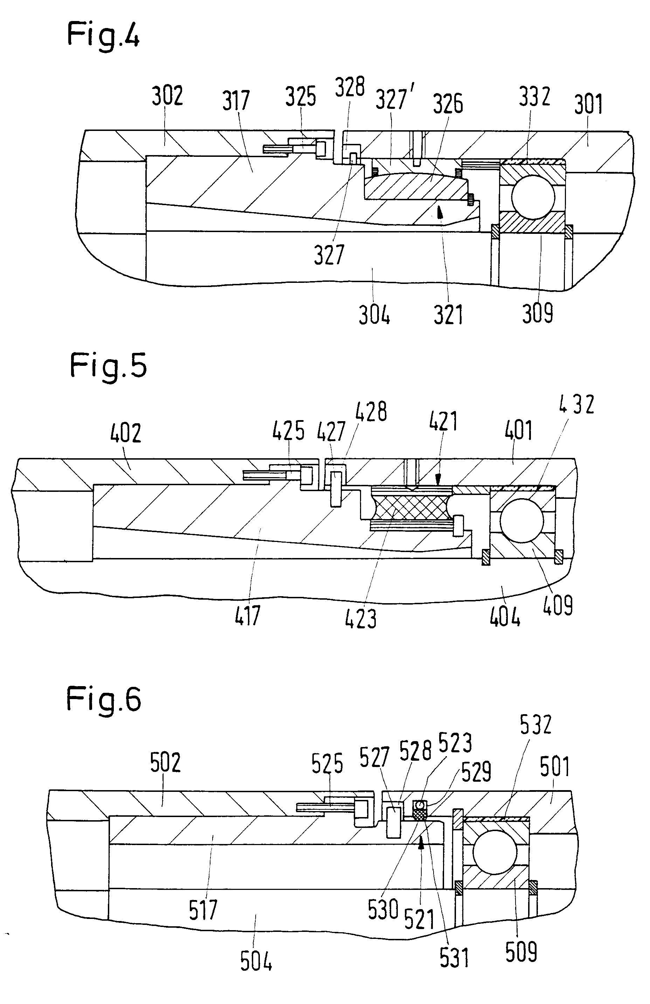

Bei der Ausführungsform nach Fig. 4 werden für entsprechende Teile um 300 erhöhte Bezugszeichen verwendet. Hier ist das Ende des mittleren Walzenrohres 301 direkt über ein Wälzlager 309, das wiederum als Rillenkugellager ausgelegt ist, aber unter Zwischenschaltung eines wärmeisolierenden Materials 332 auf der Walzenachse 304 abgestützt. Am benachbarten Ende des Walzenrohres 302 ist ein Brückenelement 317 mittels Schrauben 325 starr befestigt. Zwischen Brückenelement 317 und dem Ende des Walzenrohres 301 befindet sich eine Gelenkvorrichtung 321, die als sphärisches Lager mit einer inneren Lagerschale 326 und einer äußeren Lagerschale 327' ausgebildet ist. Am Brückenelement 317 befindet sich ein Mitnehmer 327, der in eine entsprechende Aussparung 328 am Walzenrohr 301 eingreift, so daß die beiden Walzenrohre 301 und 302 auf Drehmitnahme gekuppelt sind.

Bei der Ausführungsform nach Fig. 5 werden für entsprechende Teile um 400 erhöhte Bezugszeichen verwendet. Unterschiedlich gegenüber Fig. 4 ist im wesentlichen, daß das sphärische Lager 321 durch eine Gummi-Metall-Buchse 421 mit einem elastischen Ring 423 ersetzt ist.

Bei der Ausführungsform nach Fig. 6 werden für entsprechende Teile um 500 erhöhte Bezugszeichen verwendet. Hier dient als Gelenkvorrichtung 521 eine Kombination aus einem harten O-Ring 523, der in eine Nut 529 an der Innenseite des Walzenrohres 501 eingelegt ist, und einem in die gleiche Nut greifenden Profilring 530, der an der zylindrischen Umfangsfläche 531 des Brückenelements 517 anliegt.

Von den dargestellten Ausführungsformen kann in vielfacher Hinsicht abgewichen werden, ohne den Grundgedanken der Erfindung zu verlassen. Beispielsweise können die Wälzlager 309, 409 und 509 auch am äußeren Walzenrohr 302, 402, 502 angeordnet sein, während das Brückenelement 317, 417, 517 am mittleren Walzenrohr 301, 401, 501 angebracht ist. Auch können sphärische Lager 321 anstelle der elastischen Ringe 123, 124, 223, 224 in den Fig. 2 und 3 angewendet werden.

## Patentansprüche

1. Leitwalze für Bahnmaterial, insbesondere für Papierherstell- und -veredlungsmaschinen, mit einem mittleren (101, 102) und zwei äußeren Walzenrohren, (102, 103; 202, 203) deren benachbarte Enden über Wälzlager (109; 209, 211) auf einer an ihren Enden drehfest gelagerten Walzenachse (104, 204) abgestützt sind, während die freien Enden der äußeren Walzenrohre über Wälzlager auf radial verstellbaren Lagerelementen abgestützt sind, dadurch gekennzeichnet, daß die benachbarten Enden über ein sie untergreifendes Brückenelement (117; 217) auf Drehmitnahme miteinander verbunden sind, daß das Brückenelement (117; 217) sich auf einer gemeinsamen Wälzlagerung (109; 209; 211) abstützt und über je eine Gelenkvorrichtung (121, 122; 221, 222) mit beiden benachbarten Enden verbunden ist und daß ein wärmeisolierendes Material zwischen Wälzlager (109; 209; 211) und Walzenrohr (101, 102; 201, 202) angeordnet ist.

2. Leitwalze nach Anspruch 1, dadurch gekennzeichnet, daß die Gelenkvorrichtungen (121, 122) zu beiden Seiten eines gemeinsamen Wälzlagers (109) angeordnet sind.

3. Leitwalze nach Anspruch 1, dadurch gekennzeichnet, daß die Gelenkvorrichtungen (221, 222) zwischen zwei gemeinsamen Wälzlagern (209, 211) angeordnet sind.

4. Leitwalze für Bahnmaterial, insbesondere für Papierherstell- und -veredlungsmaschinen, mit einem mittleren (301, 401, 501) und zwei äußeren Walzenrohren (302, 303; 402, 403; 502, 503), deren benachbarte Enden über Wälzlager (309, 409, 509) auf einer an ihren Enden drehfest gelagerten Walzenachse (304, 404, 504) abgestützt sind, während die freien Enden der äußeren Walzenrohre über Wälzlager auf radial verstellbaren Lagerelementen abgestützt sind, dadurch gekennzeichnet, daß die benachbarten Enden über ein sie untergreifendes Brückenelement (317; 417, 517) auf Drehmitnahme miteinander verbunden sind, daß das Brückenelement (317; 417; 517) an dem einen der benachbarten Enden fest angebracht und zwischen ihm und dem anderen Ende eine Gelenkvorrichtung (321; 421; 521) vorgesehen ist, daß ein gemeinsames Wälzlager (309; 409; 509) nur an einem der benachbarten Enden angreift und daß ein wärmeisolierendes Material (332; 432; 532) zwischen Wälzlager (309; 409; 509) und Walzenrohr (301, 401; 501) angeordnet ist.

5. Leitwalze nach Anspruch 4, dadurch gekennzeichnet, daß das gemeinsame Wälzlager (309; 409; 509) am Ende des mittleren Walzenrohres (301; 401; 501) angreift.

6. Leitwalze nach einem der Ansprüche 1 bis 5, dadurch gekennzeichnet, daß als Wälzlager (109; 209; 211; 309; 409; 509) Rillenkugellager verwendet sind.

7. Leitwalze nach einem der Ansprüche 1 bis 6, dadurch gekennzeichnet, daß die Gelenkvorrichtung (121, 122; 221, 222; 421; 521) einen elastischen Ring (123, 124; 223, 224; 423; 530) aufweist.

8. Leitwalze nach Anspruch 7, dadurch gekennzeichnet, daß die Gelenkvorrichtung (121, 122; 221, 222; 421) durch eine Gummi-Metall-Buchse gebildet ist.

9. Leitwalze nach Anspruch 7, dadurch gekennzeichnet, daß die Gelenkvorrichtung (521) durch einen harten O-Ring (523) und einen hieran radial abgestützten Profilring (530) gebildet ist.

10. Leitwalze nach einem der Ansprüche 1 bis 6, dadurch gekennzeichnet, daß die Gelenkvorrichtung (321) ein sphärisches Lager (326, 327) aufweist.

11. Leitwalze nach einem der Ansprüche 1 bis 10, dadurch gekennzeichnet, daß die Gelenkverbindung (121, 122; 221, 222) das wärmeisolierende Material aufweist.

12. Leitwalze nach einem der Ansprüche 1 bis 11, dadurch gekennzeichnet, daß zur Drehmitnahme des einen Walzenrohres (301; 401; 501) am Brückenelement (317; 417; 517) oder am Walzenrohr ein Mitnehmer (327; 427; 527) angebracht ist, der in das jeweils andere Element eingreift.

## Claims

1. Guide roller for strip material, particularly for paper manufacturing and finishing machines, with a central (101,102) and two outer roller tubes (102,103; 202,203), whose adjacent ends are supported via roller bearings (109,209,211) of a roller axle (104,204) non-rotarily mounted at its ends, while the free ends of the outer roller tubes are supported via roller bearings on radially displaceable bearing members, characterised in that the adjacent ends are connected to provide a rotary drive relationship via a bridge member (117;217) engaging beneath them, in that the bridge member (117;217) is supported on a common roller bearing (109;209;211) and is connected via respective link devices (121,122;221,222) to both adjacent ends, and in that a heat-insulating material is located between roller bearings (109;209;211) and roller tube (101,102;201,202).

2. Guide roller according to claim 1, characterised in that the link devices (121,122) are located at both sides of a common roller bearing (109).

3. Guide roller according to claim 1, characterised in that the link devices (221;222) are located between two common roller bearings (209,211).

4. Guide roller for strip material, particularly for paper manufacturing and finishing machines with a central (301,401,501) and two outer roller tubes (302,303; 402,403; 502,503), whose adjacent ends are supported via roller bearings (309,409,509) on a roller axle (304,404,504) non-rotarily mounted at its ends, while the free ends of the outer roller tubes are supported via roller bearings on radially displaceable bearing members, characterised in that the adjacent ends are connected together to provide a rotary drive relationship via a bridge member (317;417,517) engaging underneath them, in that the bridge member (317;417;517) is rigidly attached to one of the adjacent ends and, between it and the other end, a link device (321;421;521) is provided, in that a common roller bearing (309;409;509) engages on only one of the adjacent ends, and in that a heat-insulating material (332;432;532) is located between roller bearings (309;409;509) and roller tubes (301,401;501).

5. Guide roller according to claim 4, characterised in that the common roller bearing (309;409;509) engages on the end of the central roller tube (301;401;501).

6. Guide roller according to one of claims 1 to 5, characterised in that deep-groove ball-bearings are used as roller bearings (109;209;211;309;409;509).

7. Guide roller according to one of claims 1 to 6, characterised in that the link device (121,122;221,222;421;521) has an elastic ring (123,124;223,224;423;530).

8. Guide roller according to claim 7, characterised in that the link device (121,122;221,222;421) is formed by a rubber-metal bush.

9. Guide roller according to claim 7, characterised in that the link device (521) is formed by a hard O-ring (523) and a profile ring (530) radially supported thereon.

10. Guide roller according to one of claims 1 to 6, characterised in that the link device (321) has a spherical bearing.

11. Guide roller according to one of claims 1 to 10, characterised in that the link device (121,122;221,222) has the heat-insulating material.

12. Guide roller according to one of claims 1 to 11, characterised in that there is attached for rotary drive of one roller tube (301; 501) on the bridge member (317;417;517) or on the roller tube, a follower (327;427;527), which engages in the respective other element.

## Revendications

1. Rouleau conducteur destiné à du matériel en forme de bande, notamment à des machines de fabrication et de façonnage de papier, comportant un tube central (101, 102) et deux tubes extérieurs (102, 103 ; 202, 203), dont les extrémités voisines prennent appui sur un axe (104, 204) du rouleau monté solidairement sur leurs extrémités par l'intermédiaire de paliers à roulement (109 ; 209, 211), alors que les extrémités libres des tubes extérieurs du rouleau prennent appui sur des éléments de palier radialement mobiles par l'intermédiaire de paliers à roulement, caractérisé en ce que les extrémités voisines sont reliées entre elles en entraînement de rotation par l'intermédiaire d'un élément de pontage (117 ; 217) qui passe au-dessous d'elles, en ce que l'élément de pontage (117 ; 217) prend appui sur un palier à roulement commun (109 ; 209 ; 211) et est relié aux deux extrémités voisines par l'intermédiaire d'un dispositif d'articulation (121, 122 ; 221, 222), et en ce qu'un matériau d'isolation thermique est disposé entre le palier à roulement (109 ; 209 ; 211) et le tube (101, 102 ; 201, 202) du rouleau.

2. Rouleau conducteur selon la revendication 1, caractérisé en ce que les dispositifs d'articulation (121, 122) sont disposés des deux côtés d'un palier à roulement commun (109).

3. Rouleau conducteur selon la revendication 1, caractérisé en ce que les dispositifs d'articulation (221, 222) sont disposés entre deux paliers à roulement communs (209, 211).

4. Rouleau conducteur destiné à du matériel en forme de bande, notamment à des machines de fabrication et de façonnage de papier, comportant un tube central (301, 401, 501) et deux tubes extérieurs (302, 303 ; 402, 403 ; 502, 503), dont les extrémités voisines prennent appui sur un axe (304, 404, 504) du rouleau monté solidairement sur leurs extrémités par l'intermédiaire de paliers à roulement (309, 409, 509), alors que les extrémités libres des tubes extérieurs du rouleau prennent appui sur des éléments de palier radialement mobiles par l'intermédiaire de paliers à roulement, caractérisé en ce que les extrémités voisines sont reliées entre elles en entraînement de rotation par l'intermédiaire d'un élément de pontage (317 ; 417, 517) qui passe au-dessous d'elles, en ce que l'élément de pontage (317 ; 417 ; 517) est fixé solidairement sur l'une des extrémités voisines, et en ce qu'un dispositif d'articulation (321 ; 421 ; 521) est prévu entre ce dernier et l'autre extrémité, en ce qu'un palier à roulement commun (309 ; 409 ; 509) n'agit que sur l'une des extrémités voisines, et en ce qu'un matériau d'isolation thermique (332 ; 432 ; 532) est disposé entre le palier à roulement (309 ; 409 ; 509) et le tube (301, 401 ; 501) du rouleau.

5. Rouleau conducteur selon la revendication 4, caractérisé en ce que le palier à roulement commun (309 ; 409 ; 509) agit sur l'extrémité du tube central (301 ; 401 ; 501) du rouleau.

6. Rouleau conducteur selon l'une quelconque des revendications 1 à 5, caractérisé en ce que des roulements rainurés à billes sont utilisés en tant que paliers à roulement (109 ; 209 ; 211 ; 309 ; 409 ; 509).

7. Rouleau conducteur selon l'une quelconque des revendications 1 à 6, caractérisé en ce que le dispositif d'articulation (121, 122 ; 221, 222 ; 421 ; 521) comporte une bague élastique (123, 124 ; 223, 224 ; 423 ; 530).

8. Rouleau conducteur selon la revendication 7, caractérisé en ce que le dispositif d'articulation (121, 122 ; 221, 222 ; 421) est constitué d'une douille en métal/caoutchouc.

9. Rouleau conducteur selon la revendication 7, caractérisé en ce que le dispositif d'articulation (521) est constitué d'une bague torique dure (523) et d'une bague profilée (530) qui prend radialement appui sur cette dernière.

10. Rouleau conducteur selon l'une quelconque des revendications 1 à 6, caractérisé en ce que le dispositif d'articulation (321) comporte un palier sphérique.

11. Rouleau conducteur selon l'une quelconque des revendications 1 à 10, caractérisé en ce que le dispositif d'articulation (121, 122 ; 221, 222) comporte le matériau d'isolation thermique.

12. Rouleau conducteur selon l'une quelconque des revendications 1 à 11, caractérisé en ce qu'un ergot d'entraînement (327 ; 427 ; 527), qui s'engage dans l'autre élément respectif, est disposé sur l'élément de pontage (317 ; 417 ; 517) ou sur le tube du rouleau pour l'entraînement en rotation de l'un des tubes (301 ; 401 ; 501) du rouleau.
